# EUROPEAN PATENT APPLICATION

(11) **EP 1 737 248 A2**
(43) Date of publication of application: **27.12.2006**
(21) Application number: 06251703.2
(22) Date of filing: 29.03.2006
(51) Int. Cl.: H04N 13/00

(54) **Improvements in and relating to conversion apparatus and methods**

(30) Priority: 14.06.2005 KR 20050051136
(71) Applicant: Samsung Electronics Co., Ltd., Suwon-si, Gyeonggi-Do (KR)
(72) Inventor: Ha, Tae-hyeun, Yeongtong-gu Suwon-Si Gyeonggi-do (KR)
(74) Representative: Clark, David James

(57) **Abstract**

An image display mode conversion apparatus and method, the apparatus having a display unit (170) displaying image data included in an image signal, an image characteristic parameter detector (120) detecting an image characteristic parameter which is information regarding whether the image data included in the image signal represents a two-dimensional (2D) image or a three-dimensional (3D) image, and an operation mode conversion determining unit (130) receiving the detected image characteristic parameter, determining whether or not an operation mode of the display unit should be converted, and outputting an operation mode conversion signal to the display unit (170) according to the determination result. Therefore, it is possible to provide more convenience to users in various fields, such as a 3D image broadcasting and so on, by implementing the image display mode conversion apparatus in a digital broadcast standard system.

## Description

The present invention relates to image display mode conversion apparatus and methods.

Recently, studies on broadcasting three-dimensional (3D) images through digital televisions (DTVs) have been performed. In digital broadcasting, analog signals, such as video, audio, other data and so on, are converted into digital signals, compressed and transmitted. The digital signals are received and converted into the original video, audio, and other data. Digital broadcasting can provide services with high picture quality, compared to conventional analog broadcasting.

Also, studies on the reception and displaying of 3D images using digital broadcasting technologies as described above are currently underway. Conventional methods for implementing 3D images use binocular disparity. The methods of implementing 3D images using binocular disparity include a "stereoscopy" method using glasses, such as polarization glasses, LC shutter glasses and so on, to represent 3D images, and an "autostereoscopy" method which allows the naked eyes to see 3D images using an apparatus including a lenticular lens, a parallax barrier, parallax illumination, etc.

The stereoscopy method in which a polarization projector displays images has been mainly applied to places which many people use, such as theaters. The autostereoscopy method has been applied to displays for games, home TVs, displays for exhibition, etc. which a single person or a few people use.

Until now, many studies have been concentrated on implementing 3D images using the autostereoscopy method, and various associated products have been sold. Most 3D displays that have been introduced so far can implement only 3D images and are more expensive than 2D displays.

However, since there are not many 3D image contents produced for viewers, the purchase of expensive 3D image displays cannot be justified for most consumers.

In order to broadcast 3D images similar to real images seen through human eyes, it is necessary to make and transmit multi-view 3D images, receive them, and then reproduce the multi-view 3D images with a 3D display. However, since the multi-view 3D images include a large amount of data, it is difficult to transmit the multi-view 3D images through channels used in existing digital broadcast systems due to their limited bandwidth. For this reason, studies on the transmission and reception of stereo images are being performed.

It is an aim of preferred embodiments of the present invention to address at least one disadvantage associated with the prior art, whether identified herein, or otherwise.

According to a first aspect of the present invention, there is provided an image display mode conversion apparatus comprising: a display unit displaying image data included in an image signal; an image characteristic parameter detector detecting an image characteristic parameter which is information regarding whether the image data included in the image signal represents a two-dimensional (2D) image or a three-dimensional (3D) image; and an operation mode conversion determining unit receiving the detected image characteristic parameter, determining whether or not an operation mode of the display unit should be converted, and outputting an operation mode conversion signal to the display unit according to the determination result.

According to a second aspect of the present invention, there is provided an image display mode conversion method comprising: receiving an image characteristic parameter which is information regarding whether image data represents a two-dimensional (2D) image or a three-dimensional (3D) image; comparing the received image characteristic parameter with a previous image characteristic parameter representing the characteristic of image data which is currently being displayed to determine whether or not the received image characteristic parameter is different from the previous image characteristic parameter; and if the received image characteristic parameter is different from the previous image characteristic parameter, outputting to a display unit for displaying the image data an operation mode conversion signal for converting the image display mode into an operation mode corresponding to the received image characteristic parameter.

According to a third aspect of the present invention, there is provided an image display mode conversion method comprising: receiving an image characteristic parameter which is information regarding whether image data represents a two-dimensional (2D) image or a three-dimensional (3D) image; comparing the received image characteristic parameter with a previous image characteristic parameter representing the characteristic of image data which is currently being displayed to determine whether or not the received image characteristic parameter is different from the previous image characteristic parameter; and if it is determined that the received image characteristic parameter is different from the previous image characteristic parameter, outputting a notification signal indicating the determination result.

According to a fourth aspect of the present invention, there is provided a computer-readable medium having embodied thereon a computer program for executing the image display mode conversion method of the second or third aspect.

According to the present invention there is provided an apparatus and method as set forth in the appended claims. Preferred features of the invention will be apparent from the dependent claims, and the description which follows.

In this way, preferred embodiments of the present invention can automatically convert an operation mode of a display apparatus in a digital broadcast system, etc. according to whether an image displayed is a 2D image or a 3D image and an image characteristic parameter representing the characteristic of the 3D image, or can inform a user that an operation mode should be converted.

For a better understanding of the invention, and to show how embodiments of the same may be carried into effect, reference will now be made, by way of example, to the accompanying diagrammatic drawings in which:
FIG. 1 is a block diagram of an image display mode conversion apparatus according to an embodiment of the present invention;
FIG. 2 is a detailed block diagram of an operation mode conversion determining unit of the image display mode conversion apparatus shown in FIG. 1;
FIG. 3 is an example of a transport steam structure to be received through a receiver of the image display mode conversion apparatus shown in FIG. 1;
FIGS. 4A and 4B are block diagrams for explaining examples of the number of camera viewpoints for a three-dimensional (3D) image;
FIGS. 5A through 5D are views showing examples of display formats for a 3D image;
FIG. 6 is a block diagram of an image transmitting apparatus for transmitting a transport stream to be received through the receiver of the image display mode conversion apparatus shown in FIG. 1;
FIG. 7 is a flowchart illustrating an image display mode conversion method according to an embodiment of the present invention;
FIG. 8 is a flowchart illustrating an image display mode automatic conversion method when an image characteristic parameter indicates a 2D image or a 3D image, according to an embodiment of the present invention;
FIG. 9 is a flowchart illustrating an image display mode conversion informing method when an image characteristic parameter indicates a 2D image or a 3D image, according to an embodiment of the present invention;
FIG. 10 is a flowchart illustrating an image display mode automatic conversion method when an image characteristic parameter is information regarding the number of camera viewpoints or a display format for a 3D image, according to an embodiment of the present invention; and
FIG. 11 is a flowchart illustrating an image display mode conversion informing method when an image characteristic parameter is information regarding the number of camera viewpoints or a display format for a 3D image, according to an embodiment of the present invention.

The present invention will now be described more fully with reference to the accompanying drawings, in which exemplary, embodiments of the invention are shown.

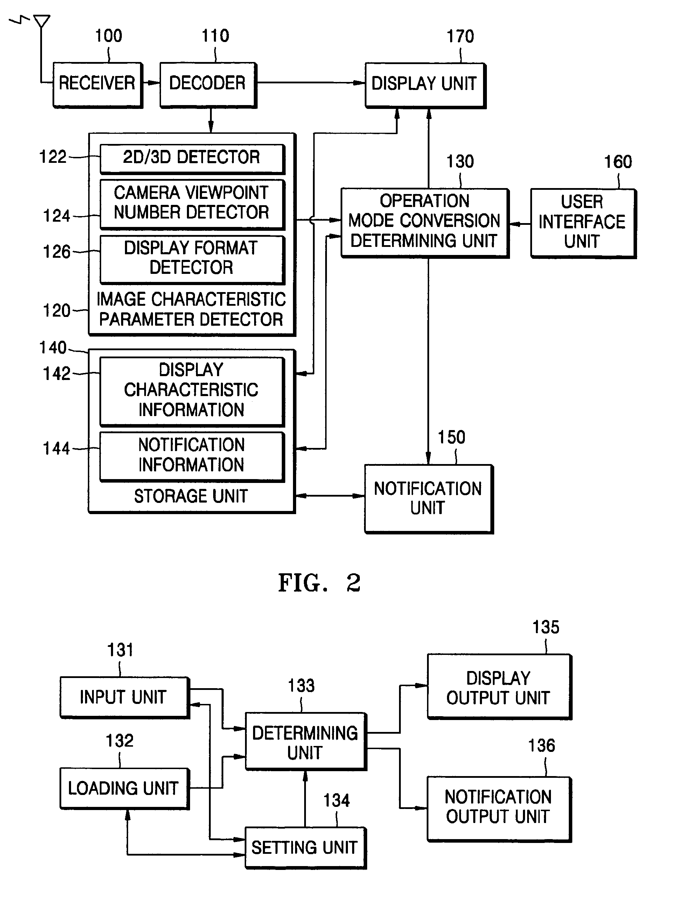

FIG. 1 is a block diagram of an image display mode conversion apparatus according to an embodiment of the present invention. Referring to FIG. 1, the image display mode conversion apparatus includes a receiver 100, a decoder 110, an image characteristic parameter detector 120, an operation mode conversion determining unit 130, a storage unit 140, a notification unit 150, a user interface unit 160, and a display unit 170. The image characteristic parameter detector 120 includes a two-dimensional (2D)/three-dimensional (3D) detector 122, a camera viewpoint number detector 124, and a display format detector 126. The storage unit 140 stores display characteristic information 142 and notification information 144.

The receiver 100 receives an image signal transmitted from an image transmitting apparatus. The image signal received through the receiver 100 is an image signal having a transport stream format. In more detail, the image signal may be data which is available for digital broadcast systems which performs 3D broadcasting.

The decoder 110 decodes the image signal according to an encryption specification of the image transmitting apparatus. For example, if the image signal has been encoded according to the MPEG-2 specification, the decoder 110 decodes the image signal according to the MPEG-2 specification. In more detail, the decoder 110 restores an image signal encoded based on its temporal and spatial correlation into an original image and an image characteristic parameter using a decryption technique such as variable length decoding, inverse DCT, inverse quantization, movement compensation and so on.

The image characteristic parameter detector 120 detects an image characteristic parameter from information included in a predetermined portion of the header of the decoded transport stream, and outputs the image characteristic parameter to the operation mode conversion determining unit 130. As described above, the image characteristic parameter detector 120 includes the 2D/3D detector 122, the camera viewpoint number detector 124, and the display format detector 126.

The 2D/3D detector 122 determines whether image data included in the payload of the image signal represents a 2D image or a 3D image.

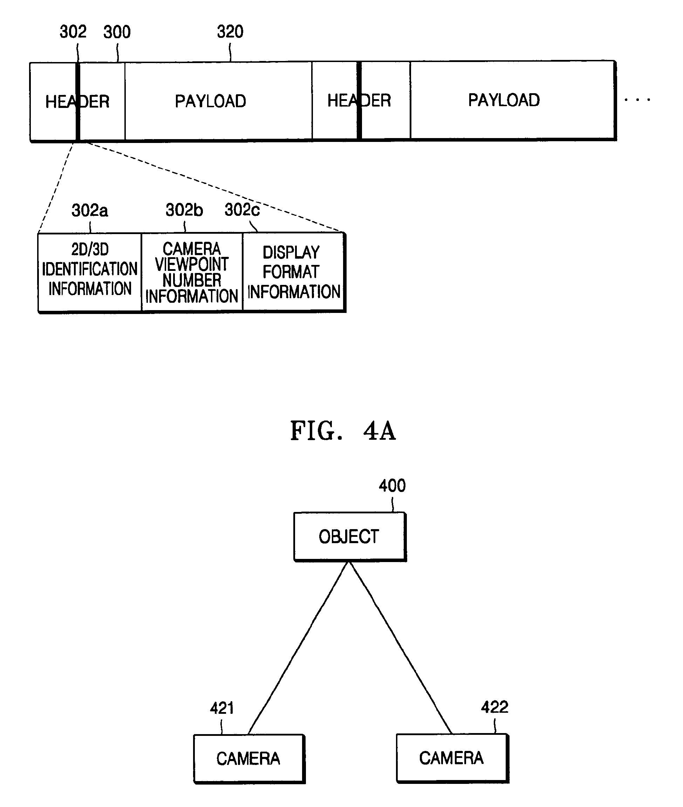

If the 2D/3D detector 122 determines that the image data is a 3D image, the camera viewpoint number detector 124 detects camera viewpoint number information for the image data. The number of the camera viewpoints for the 3D image is information indicating the number of different angles at which an object is picked up when the object is picked up by cameras to produce images. The number of camera viewpoints for a 3D image will be described in more detail later with reference to FIG. 4.

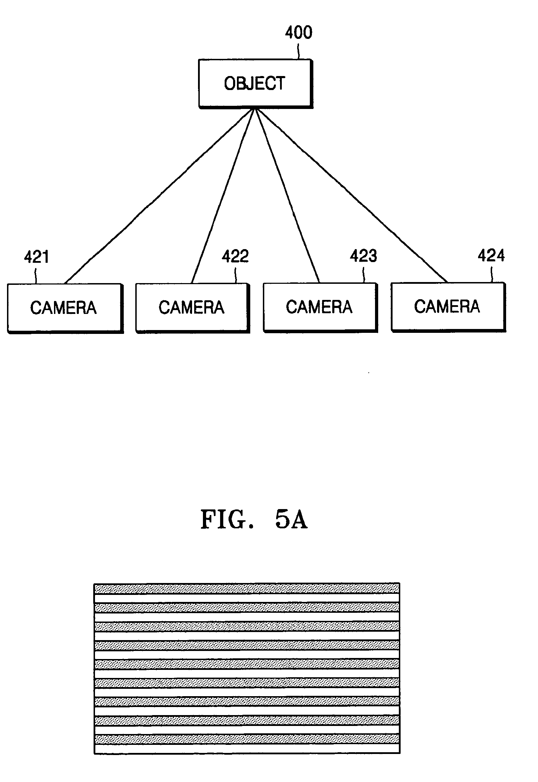

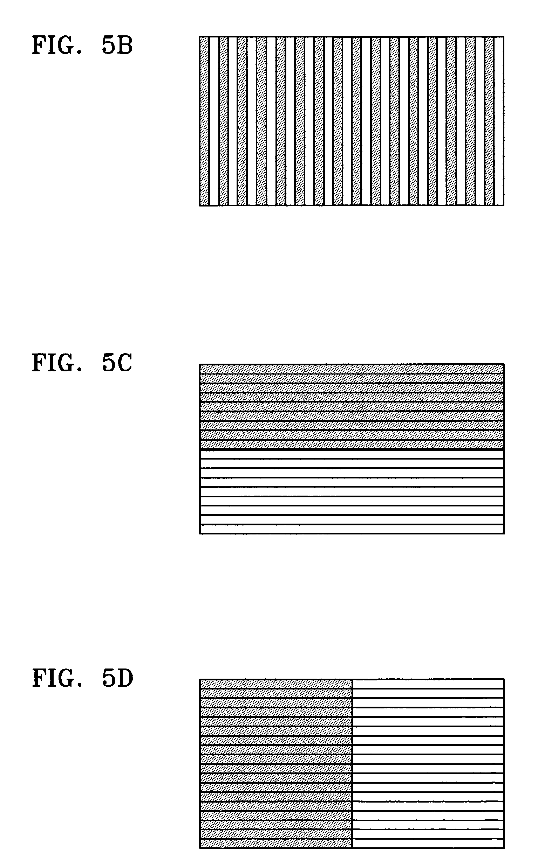

The display format detector 126 detects display format information for the 3D image data. The display format information indicates in what format a single scene is to be displayed to form a 3D image. Display formats of a 3D image include a line-by-line format, a pixel-by-pixel format, a top-down format, a side-by-side format, etc. The information regarding display formats for a 3D image will be described in more detail later with reference to FIG. 5.

The user interface unit 160 provides an input/output interface for receiving, from a user, a command for controlling the operation mode conversion determining unit 130.

The operation mode conversion determining unit 130 receives the image characteristic parameter detected by the image characteristic parameter detector 120, and determines whether or not the operation mode of the display unit 170 should be converted according to whether or not the received image characteristic parameter has changed.

FIG. 2 is a detailed block diagram of the operation mode conversion determining unit 130 shown in FIG. 1. Referring to FIG. 2, the operation mode conversion determining unit 130 includes an input unit 131, a loading unit 132, a determining unit 133, a setting unit 134, a display output unit 135, and a notification output unit 136.

The input unit 131 receives an image characteristic parameter detected by the image characteristic parameter detector 120.

The loading unit 132 loads the storage unit 140 so as to store therein characteristic information related to the image characteristic parameter.

The determining unit 133 determines whether or not the operation mode of the display unit should be converted. If it is determined that the operation mode of the display unit should be converted, the determining unit 133 outputs a notification signal indicating that an operation mode conversion signal should be output to the display unit 170 through the display output unit 135, or outputs a notification signal indicating that the operation mode of the display unit 170 should be converted to the notification unit 150 through the notification signal output unit 136.

The setting unit 134 allows the determining unit 133 to output an operation mode conversion signal through the display output unit 135 or allows the determining unit 133 to output a notification signal indicating that the operation mode should be converted through the notification signal output unit 136, according to an interface signal received through the user interface 160.

Also, the setting unit 134 instructs the display output unit 135 to output an operation mode conversion signal, and instructs the notification signal output unit 136 to output an operation mode conversion notification signal indicating a fact that the operation mode has been automatically converted.

In more detail, for example, the determining unit 133 determines whether to convert a display operation mode according to whether an image characteristic parameter received through the input unit 131 has changed. The image characteristic parameter contains only information regarding whether the image data received from the image characteristic parameter detector 120 represents a 2D image or a 3D image. That is, if the determining unit 133 receives an image characteristic parameter indicating that image data represents a 3D image after receiving an image characteristic parameter indicating that current image data represents a 2D image from the input unit 131, the determining unit 133 converts the operation mode of the display unit 170 into a 3D display mode or informs a user that the operation mode of the display unit 170 should be converted.

In more detail, for example, the determining unit 133 compares an image characteristic parameter received through the input unit 131 with characteristic information of the display unit 170 loaded through the loading unit 132, thus determining whether or not to convert the operation mode of the display unit 170. If the image data represents a 3D image, the image characteristic parameter contains information regarding the number of camera viewpoints or a display format for the 3D image. That is, if the determining unit 133 receives an image characteristic parameter containing a different number of camera viewpoints for the 3D image while receiving an image characteristic parameter containing a predetermined number of camera viewpoints for currently received 3D image data, the determining unit 133 converts the operation mode of the display unit 170 into an operation mode corresponding to the new number of camera viewpoints or informs a user that the operation mode of the display unit 170 should be converted.

The storage unit 140 stores display unit characteristic information 142 related to the image characteristic parameter, and notification information 144 related to the notification signal if a notification signal indicating that the operation mode of the display unit should be converted is output through the notification unit 150.

The notification unit 150 receives, from the notification output unit 136 of the operation mode conversion determining unit 130, the notification signal indicating that the operation mode of the display unit 170 should be converted, and converts and displays the notification signal so that a user can perceive it.

When the notification output unit 136 of the operation mode conversion determining unit 130 determines that the operation mode of the display unit 170 cannot perform its functions, the notification unit 150 indicates the determination result to a user through a display screen.

In more detail, the notification unit 150 can be implemented by various devices, such as an On-Screen-Display (OSD), a light-emitting diode (LED), a speaker and so on.

The display unit 170 receives the operation mode conversion signal transmitted from the operation mode conversion determining unit 130 and the image data decoded by the decoder unit 110. Then, the display unit 170 displays the decoded image data on a screen according to the operation mode conversion signal.

In more detail, if the operation mode conversion signal indicates a 2D operation mode, the display unit 170 displays the decoded image data received from the decoder unit 110 in a two-dimensional format on the screen. If the operation mode conversion signal indicates a 3D operation mode, the display unit 170 displays the decoded image data received from the decoder unit 110 in a three-dimensional format on the screen. Further, if the operation mode conversion signal indicates an operation mode corresponding to a predetermined number of camera viewpoints for a 3D image or an operation mode corresponding to a predetermined display format for a 3D image, the display unit 170 displays the decoded image data in the operation mode corresponding to the predetermined number of the camera viewpoints for the 3D image or in the operation mode corresponding to the predetermined display format for the 3D image.

The display unit 170 is a 2D/3D convertible display. The 2D/3D convertible display can be implemented through various methods. Specifically, the display unit 170 according to embodiments of the present invention can include an image forming panel display, a lens unit, and a power supply for selectively supplying a voltage to the lens unit, as disclosed in Korean Patent Publication No. 10-0440956, entitled "2D/3D convertible display". Also, the display unit 170 can be implemented by a 2D/3D convertible display which includes a liquid crystal shutter behind a TFT-LCD and selectively displays a 2D image and a 3D image using the liquid crystal shutter. However, the above description is only exemplary, and the display unit 170 according to the present invention is not limited to the above.

FIG. 3 illustrates the structure of a transport stream received through the receiver 100 shown in FIG. 1. Referring to FIG. 3, the transport stream is composed of a header 300 and a payload 320.

The header 300 of the transport stream includes various control information for displaying image data included in the payload 320. An image characteristic parameter 302 related to a display format for image data stored in the payload 320 is included in a predetermined location of the transport stream header 300. The image characteristic parameter 302 includes 2D/3D identification information 302a indicating whether the image data stored in the payload 320 represents a 2D image (for example, a general TV signal, a VCR signal, etc.) or a 3D image. If the image data stored in the payload 320 represents a 3D image, the image characteristic parameter 302 can further include information 302b regarding the number of camera viewpoints for the 3D image. Also, if the image data stored in the payload 320 represents a 3D image, the image characteristic parameter can further include display format information 302c for the 3D image.

FIGS. 4A and 4B are views for explaining examples of the number of camera viewpoints for a three-dimensional (3D) image. Referring to FIG. 4A, an object 400 is picked up by two cameras 421 and 422 that are placed in different locations. That is, the number of camera viewpoints for the 3D image is 2. The cameras 421 and 422 respectively pick up a left-eye image and a right-eye image of the object 400.

Referring to FIG. 4B, the object 400 is picked up by four cameras 421, 422, 423 and 424 that are placed in different locations. That is, the number of camera viewpoints for the 3D image is 4.

In FIGS. 4A and 4B, the object 400 may be a fixed object or a moving object. In FIGS. 4A and 4B, cases where the number of camera viewpoints for the 3D image are two and four are shown, however, the number of camera viewpoints for the object 400 can be different.

FIGS. 5A through 5D are views showing examples of display formats for a 3D image. In detail, FIG. 5A shows an image based on a line-by-line format, FIG. 5B shows an image based on a pixel-by-pixel format, FIG. 5C shows an image based on a top-down format, and FIG. 5D shows an image based on a side-by-side format.

Hereinafter, a display format for stereo images (left-eye image and right-eye image) will be described. It will be assumed that each of the left-eye and right-eye images has a size of NxM. The image based on the line-by-line format shown in FIG. 5A is a 3D image obtained by 1/2 subsampling a left-eye image and a right-eye image respectively in a vertical direction so that pixels of the left-eye image and pixels of the right-eye image are alternately located in respective horizontal lines. The image based on the pixel-by-pixel format shown in FIG. 5B is a 3D image obtained by 1/2 subsampling a left-eye image and a right-eye image respectively in a horizontal direction so that pixels of the left-eye image and pixels of the right-eye image are alternately located in respective vertical lines. The image based on the top-down format shown in FIG. 5C is a 3D image obtained by 1/2 subsampling a left-eye image and a right-eye image respectively in a vertical direction, positioning the sampled left-eye image in the upper portion of the final image and positioning the sampled right-eye image in the lower portion of the final image. That is, by respectively subsampling an NxM left-eye image and an NxM right-eye image into NxM/2 images and respectively positioning the sampling results in the upper portion and in the lower portion of a final image, an NxM 3D image is obtained. The image based on the side-by-side format shown in FIG. 5D is a 3D image obtained by 1/2 subsampling a left-eye image and a right-eye image respectively in a horizontal direction, positioning the sampled left-eye image in the left portion of the final image and positioning the sampled right-eye image in the right portion of the final image. That is, by respectively subsampling an NxM left-eye image and an NxM right-eye image into N/2xM images and respectively positioning the sampling results in the left portion and in the right portion of the final image, an NxM 3D image is obtained.

Among the display formats for a 3D image described above, the top-down format shown in FIG. 5C and the side-by-side format shown in FIG. 5D are mainly used because they are efficiently compressed according to MPEG standards and transmitted.

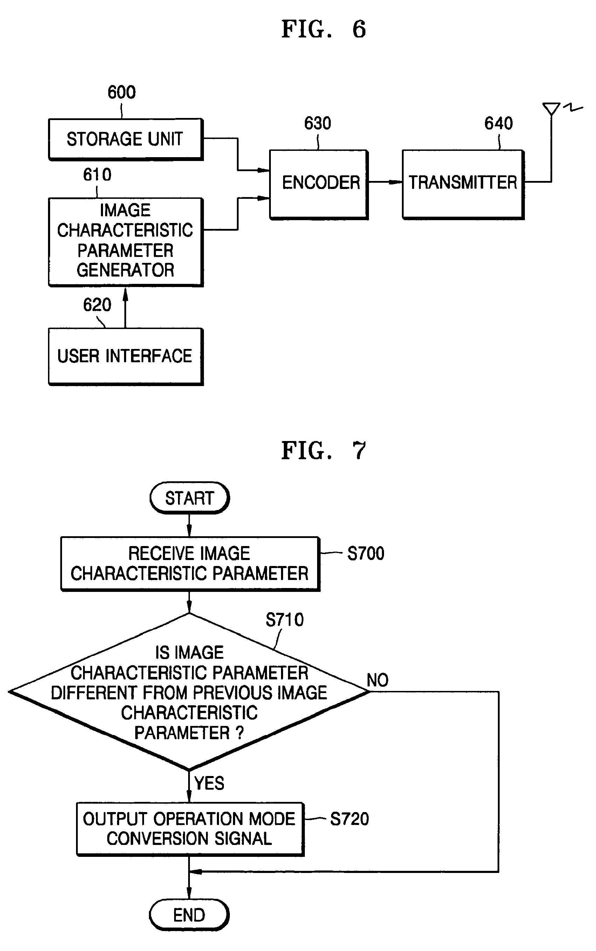

FIG. 6 is a block diagram of an image transmitting apparatus for transmitting a transport stream input to the receiver 100 shown in FIG. 1. Referring to FIG. 6, the image transmitting apparatus includes a storage unit 600, an image characteristic parameter generator 610, a user interface unit 620, an encoder 630, and a transmitter 640.

The storage unit 600 stores image data obtained by picking up an object. Image data which is stored in the storage unit 600 may illustrate an image obtained by picking up an object using a single camera or images obtained by picking up an object using a plurality of cameras.

That is, image data stored in the storage unit 600 may be a 2D image, or a 3D image based on one of the display formats illustrated, in FIGS. 5A through 5D, obtained by subsampling and integrating left-eye images and right-eye images picked up by a plurality of cameras.

The image characteristic parameter generator 610 generates an image characteristic parameter regarding the image data stored in the storage unit 600. The image characteristic parameter includes information indicating whether the image data is a 2D image or a 3D image. If the image data is a 3D image, the image characteristic parameter can include camera viewpoint number information or display format information.

The user interface unit 620 receives a command for controlling the image characteristic parameter generator 610 from a user and provides an input/output interface for receiving the image characteristic parameter. The user can create an image characteristic parameter regarding the image data stored in the storage unit 600, by adjusting settings through the user interface unit 620.

According to a non-limiting embodiment of the present invention, an image characteristic parameter is created using a user interface unit 620, however, various other possibilities, such as creating an image characteristic parameter when an image is picked up, are possible.

The encoder 630 receives the image data obtained by picking up the object from the storage unit 600 and the image characteristic parameter created by the image characteristic parameter generator 610. Also, the encoder 630 encodes the image data received from the storage unit 600 and the image characteristic parameter received from the image characteristic parameter generator 610, and converts the received data into a transport stream format. Here, the encoder 630 performs encoding by including the image data received from the storage unit 600 in the payload of the transport stream and including the image characteristic parameter in a predetermined location of the header of the transport stream. Also, the encoder 630 performs the encoding using various methods, such as the MPEG standard and so on. The transmitter 640 transmits the encoded transport stream according to a transmission standard, such as a digital broadcast standard and so on.

FIG. 7 is a flowchart illustrating a display mode automatic conversion method for automatically converting a display mode into a 2D image display mode or into a 3D image display mode, according to an embodiment of the present invention.

Referring to FIG. 7, first, an image characteristic parameter representing the characteristics of image data is received (operation S700).

Then, the image characteristic parameter (hereinafter, referred to as a present image characteristic parameter) received in operation S700 is compared with an image characteristic parameter (hereinafter, referred to as a previous image characteristic parameter) representing the characteristics of image data which is being currently displayed, and it is determined whether or not the present image characteristic parameter is different from the previous image characteristic parameter (operation S710). Each of the image characteristic parameters includes information indicating whether corresponding image data represents a 2D image or a 3D image. If the image data represents a 3D image, each of the image characteristic parameters can include camera viewpoint number information or display format information.

If it is determined in operation S710 that the present image characteristic parameter is different from the previous image characteristic information, an operation mode conversion signal corresponding to the present image characteristic parameter is output to a display unit for displaying images represented by the image data (operation S720).

Meanwhile, if it is determined in operation S710 that the present image characteristic parameter is the same as the previous image characteristic parameter, the process is terminated.

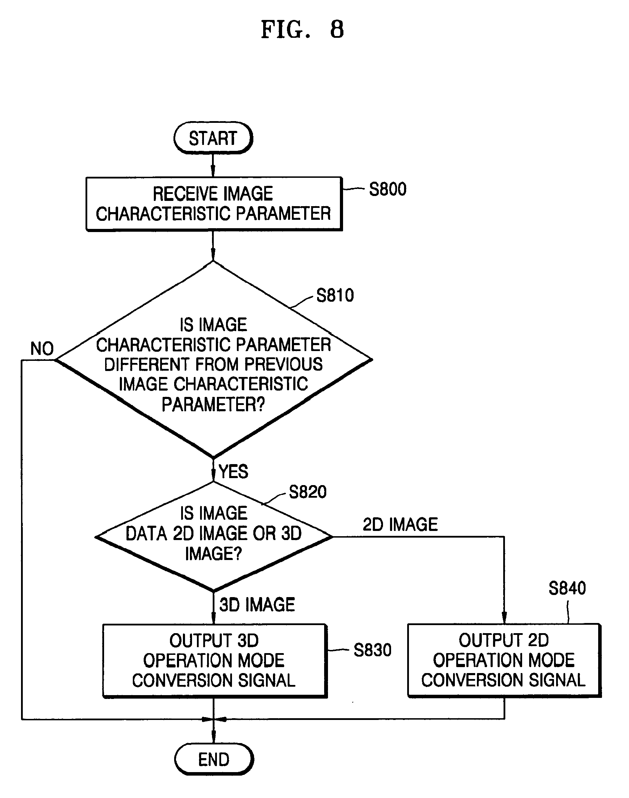

FIG. 8 is a flowchart illustrating an image display mode automatic conversion method when an image characteristic parameter indicates a 2D image or a 3D image, according to an embodiment of the present invention. Referring to FIG. 8, first, an image characteristic parameter representing the characteristic of image data is received (operation S800). The image characteristic parameter includes information regarding whether corresponding image data represents a 2D image or a 3D image.

Then, the image characteristic parameter (hereinafter, referred to as a present image characteristic parameter) received in operation S800 is compared with an image characteristic parameter (hereinafter, referred to as a previous image characteristic parameter) representing the characteristic of image data which is being currently displayed, and it is determined whether or not the present image characteristic parameter is different from the previous image characteristic parameter (operation S810).

If it is determined in operation S810 that the present image characteristic parameter is different from the previous image characteristic parameter, it is determined whether the corresponding image data represents a 2D image or a 3D image according to the present image characteristic parameter (operation S820). Meanwhile, if it is determined in operation S810 that the present image characteristic parameter is the same as the previous image characteristic parameter, the process is terminated.

If it is determined in operation S820 that the image data represents a 3D image, a 3D operation mode conversion signal for converting the operation mode of the display unit into a 3D operation mode is output to the display unit (operation S830). If it is determined in operation S820 that the image data represents a 2D image, a 2D operation mode conversion signal for converting the operation mode of the display unit into a 2D operation mode is output to the display unit (operation S840).

Operation S830 can further include outputting a notification signal for informing a notification unit of the fact that the operation mode of the display unit has been converted into the 3D operation mode. Also, operation S840 can further include outputting a notification signal for informing the notification unit of the fact that the operation mode of the display unit has been converted into the 2D operation mode.

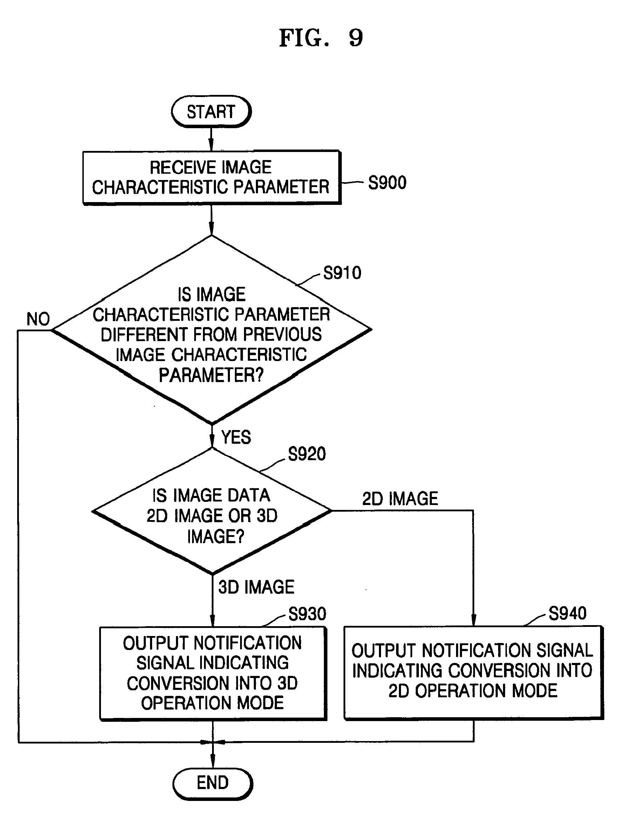

FIG. 9 is a flowchart illustrating an image display mode conversion informing method when an image characteristic parameter indicates a 2D image or and a 3D image, according to an embodiment of the present invention. Referring to FIG. 9, an image characteristic parameter representing the characteristic of image data is received (operation S900). The image characteristic parameter includes information regarding whether the image data represents a 2D image or a 3D image.

Then, the image characteristic parameter (hereinafter, referred to as a present image characteristic parameter) received in operation S900 is compared with an image characteristic parameter (hereinafter, referred to as a previous image characteristic parameter) representing the characteristic of image data which is being currently displayed, and it is determined whether or not the present image characteristic parameter is different from the previous image characteristic parameter (operation S910).

If it is determined in operation S910 that the present image characteristic parameter is different from the previous image characteristic parameter, it is determined whether the corresponding image data represents a 2D image or a 3D image according to the present image characteristic parameter (operation S920). Meanwhile, if it is determined in operation S910 that the present image characteristic parameter is the same as the previous image characteristic parameter, the process is terminated.

If it is determined in operation S920 that the image data represents a 3D image, a notification signal informing a notification unit that the operation mode of a display unit should be converted into a 3D operation mode is output (operation S930). If it is determined in operation S920 that the image data represents a 2D image, a notification signal informing the notification unit that the operation mode of the display unit should be converted into a 2D operation mode is output (operation S940).

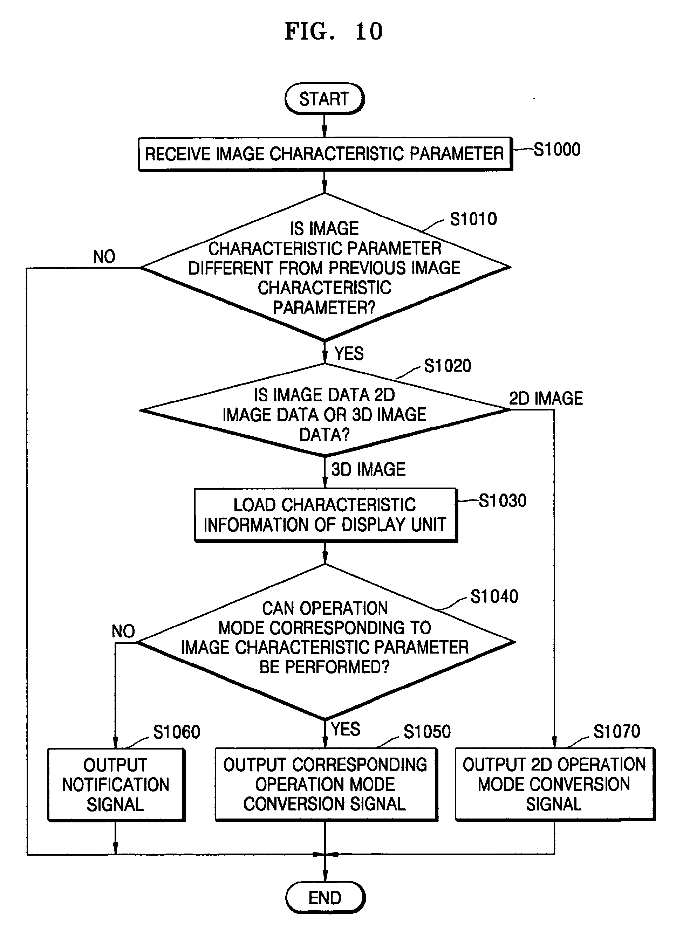

FIG. 10 is a flowchart illustrating an image display mode automatic conversion method when an image characteristic parameter is information regarding the number of camera viewpoints or a display format for a 3D image, according to a non-limiting embodiment of the present invention. Referring to FIG. 10, first, an image characteristic parameter representing the characteristic of image data is received (operation S1000). The image characteristic parameter includes camera viewpoint number information or display format information for the 3D image if the corresponding image data is a 3D image.

Then, the image characteristic parameter (hereinafter, referred to as a present image characteristic parameter) received in operation S1000 is compared with a image characteristic parameter (hereinafter, referred to as a previous image characteristic parameter) representing the characteristic of image data which is being currently displayed, and it is determined whether or not the present image characteristic parameter is different from the previous image characteristic parameter (operation S 1010).

If it is determined in operation S1010 that the present image characteristic parameter is different from the previous image characteristic parameter, it is determined whether corresponding image data represents a 2D image or a 3D image according to the present image characteristic parameter (operation S1020). Meanwhile, if it is determined in operation S1010 that the present image characteristic parameter is the same as the previous image characteristic parameter, the process is terminated.

If it is determined in operation S1020 that the image data represents a 3D image, characteristic information of a display unit corresponding to the image characteristic parameter is loaded (operation S1030). If it is determined in operation S1020 that the image data represents a 2D image, an operation mode conversion signal for converting the operation mode of the display unit into a 2D operation mode is output to the display unit (operation S1070).

In operation S1030, the image characteristic parameter received in operation S1000 is compared with the characteristic information of the display unit loaded in operation S1030, and it is determined whether or not the display unit can operate in an operation mode corresponding to the image characteristic parameter received in operation S1000 (operation S1040).

If it is determined in operation S1040 that the display unit can operate in the operation mode corresponding to the image characteristic parameter received in operation S1000, an operation mode conversion signal for converting the operation mode of the display unit into the operation mode according to the corresponding camera viewpoint number information and display format information is output to the display unit (operation S1050). Meanwhile, if it is determined in operation S1040 that the display unit cannot operate in the operation mode corresponding to the received image characteristic parameter, a notification signal informing a notification unit that the determination result is output (operation S1060).

Further, operation S1050 can further include outputting a notification signal for informing the notification unit of the fact that the operation mode of the display unit has been converted into the operation mode according to the camera viewpoint number information and display format information for the 3D image. Also, operation S1070 can further include outputting a notification signal informing the notification unit of the fact that the operation mode of the display unit has been converted into the 2D operation mode.

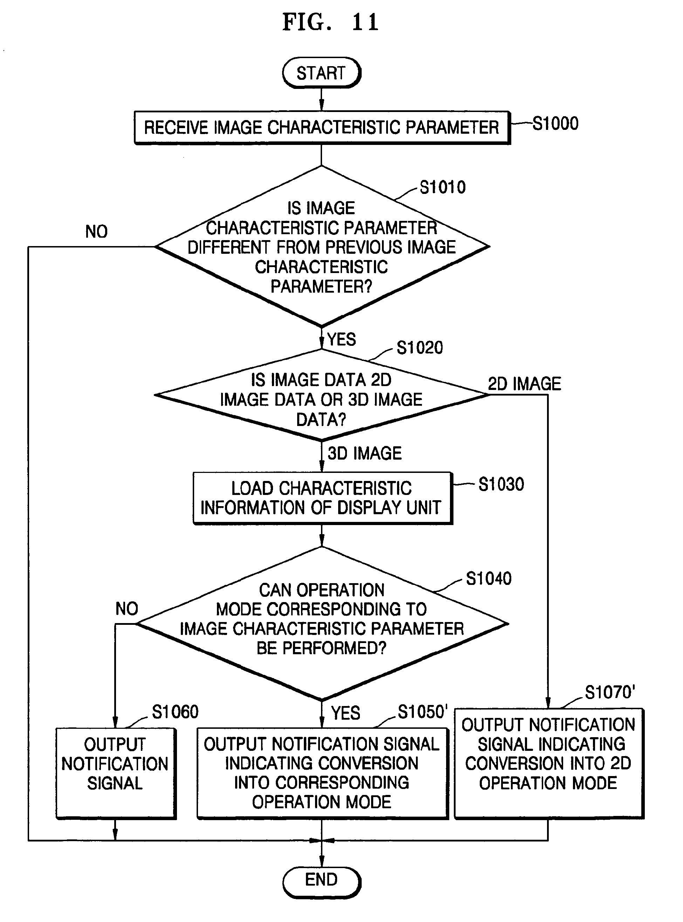

FIG. 11 is a flowchart illustrating an image display mode conversion informing method when an image characteristic parameter includes camera viewpoint number information or display format information for a 3D image. Here, like reference numbers in FIGS. 10 and 11 refer to like operations, and detailed descriptions therefor are omitted.

In operation S1050', if it is determined in operation S1040 that the display unit can operate in an operation mode corresponding to an image characteristic parameter received in operation S1000, an operation mode conversion signal is output to the display unit informing the display unit that the operation mode of the display unit should be converted into the operation mode corresponding to the corresponding camera viewpoint number information or display format information.

In operation S1070', if it is determined in operation S1020 that the image data represents a 2D image, a notification signal is output to the display unit informing the display unit that the operation mode of the display unit should be converted into a 2D operation mode is output.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion.

As described above, according to preferred embodiments of the present invention, by automatically converting the operation mode of a display apparatus or informing a user that the operation mode of a display apparatus should be converted through image characteristic parameters representing the characteristics of a 2D image and a 3D image, it is possible to provide more convenience to users in fields requiring more enhanced image information. For example, in medical analysis fields, engineering fields, simulation fields, 3D image broadcasts which will be introduced in future using DTV standard systems, etc, and in various fields, such as digital broadcast systems, simulations, medical analysis systems and so on, where 2D images as well as 3D images may be selectively used. However, in existing digital broadcast systems, an apparatus and method for automatically converting an operation mode of a display apparatus according to the reception of 2D images, 3D images and image characteristic parameters representing the characteristics of the 3D images, or for informing a user that an operation mode should be converted, are still not elsewhere developed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image display mode conversion apparatus comprising:
a display unit (170) for displaying image data included in an image signal; an image characteristic parameter detector detecting an image characteristic parameter which is information regarding whether the image data included in the image signal represents a two-dimensional (2D) image or a three-dimensional (3D) image; and
an operation mode conversion determining unit (130) for receiving the detected image characteristic parameter, determining whether or not an operation mode of the display unit should be converted, and outputting an operation mode conversion signal to the display unit (170) according to the determination result.

2. The apparatus of claim 1, wherein the image characteristic parameter detector (120) further comprises:
a camera viewpoint number detector (124) for detecting information regarding the number of camera viewpoints for the 3D image if the image data represents a 3D image.

3. The apparatus of claim 1 or 2, wherein the image characteristic parameter detector (120) further comprises:
a display format detector (126) for detecting information regarding a display format of the 3D image if the image data represents a 3D image.

4. The apparatus of claim 3, wherein the display formats of the 3D image detectable by the display format detector include one or more of: a line-by-line format; a pixel-by-pixel format; a top-down format; or a side-by-side format.

5. The apparatus of any preceding claim, wherein the operation mode conversion determining unit (130) comprises:
an input unit (131) for receiving the detected image characteristic parameter; and
a determining unit determining whether or not the detected image characteristic parameter changes, thereby determining whether or not the operation mode of the display unit should be converted.

6. The apparatus of claim 5, wherein the operation mode conversion determining unit (130) further comprises:
a loading unit (132) loading characteristic information for the display unit (170)corresponding to the detected image characteristic parameter,
and wherein in use the operation mode conversion determining unit (133) is arranged to determine whether or not the operation mode of the display unit (170) should be converted by comparing the detected image characteristic parameter received through the input unit (131) with the characteristic information of the display unit (170).

7. The apparatus of claim 5 or 6, wherein the operation mode conversion determining unit (130) further comprises:
a display output unit (135) for outputting an operation mode conversion signal to the display unit (170) if it is determined that the operation mode of the display unit (170) should be converted.

8. The apparatus of claim 5, 6 or 7 wherein the operation mode conversion determining unit (130) further comprises:
a notification output unit (136) for outputting a notification signal indicating the determination result of a user if it is determined that the operation mode of the display unit (170) should be converted.

9. The apparatus of claim 5, 6, 7 or 8 wherein the operation mode conversion determining unit (130) further comprises:
a display output unit (135) for outputting an operation mode conversion signal to the display unit (170) if it is determined that the operation mode of the display unit (170) should be converted;
a notification output unit (136) for outputting a notification signal indicating the determination result of a user if it is determined that the operation mode of the display unit should be converted; and
a setting unit (134) for deciding whether to activate the display output (135) unit or to activate the notification output unit (136) if it is determined that the operation mode of the display unit (170) should be converted.

10. The apparatus of any preceding claim, further comprising:
a storage unit (140) storing characteristic information of the display unit (170) corresponding to the image characteristic parameter.

11. The apparatus of any preceding claim, further comprising:
a notification unit (150) for indicating that the operation mode of the display unit (170) should be converted or that the operation mode of the display unit (170) has been converted,
wherein the notification unit (150) is one or more of: an On-Screen-Display (OSD); a light-emitting diode (LED); or a speaker.

12. The apparatus of any preceding claim, further comprising:
a user interface unit (160) for providing an input/output interface capable of receiving a command for controlling the operation mode conversion determining unit (136) from a user.

13. The apparatus of any preceding claim, wherein the image characteristic parameter detector (120) is arranged to detect an image characteristic parameter included in a header of an image signal.

14. The apparatus of any preceding claim, wherein the display unit (170) is arranged to display image data received from a digital broadcast system.

15. An image display mode conversion method comprising:receiving an image characteristic parameter which is information regarding whether image data represents a two-dimensional (2D) image or a three-dimensional (3D) image;
comparing the received image characteristic parameter with a previous image characteristic parameter representing a characteristic of image data which is currently being displayed to determine whether or not the received image characteristic parameter is different from the previous image characteristic parameter; and
if the received image characteristic parameter is different from the previous image characteristic parameter, outputting to a display unit for displaying the image data, an operation mode conversion signal for converting an image display mode into an operation mode corresponding to the received image characteristic parameter.

16. The method of claim 15, further comprising:
if it is determined that the received image characteristic parameter is different from the previous image characteristic parameter, outputting a notification signal indicating the determination result.

17. The method of claim 15 or 16, wherein the received image characteristic parameter further includes information regarding a number of camera viewpoints for the 3D image if the image data is a 3D image.

18. The method of claim 15, 16 or 17, wherein the outputting of the operation mode conversion signal comprises:
if it is determined that the received image characteristic parameter is different from the previous image characteristic parameter, loading characteristic information of the display unit corresponding to the received image characteristic parameter;
comparing the received image characteristic parameter with the loaded characteristic information of the display unit to determine whether or not the received image characteristic parameter is the same as the loaded characteristic information; and
if it is determined that the received image characteristic parameter is the same as the loaded characteristic information, outputting an operation mode conversion signal to the display unit to convert the image display mode into an operation mode corresponding to the received image characteristic parameter.

19. The method of claim 18, further comprising:
if it is determined that the received image characteristic parameter is not the same as the loaded characteristic information, outputting a notification signal indicating the determination result.

20. The method of any one of claims 15-19, wherein the received image characteristic parameter further includes information regarding a display format of the 3D image if the image data is a 3D image.

21. The method of claim 20, wherein the display format of the 3D image is a line-by-line format, a pixel-by-pixel format, a top-down format or a side-by-side format.

22. The method of claim 20 or 21, wherein the outputting of the operation mode conversion signal comprises:
if it is determined that the received image characteristic parameter is different from the previous image characteristic information, loading characteristic information of the display unit corresponding to the received image characteristic parameter;
comparing the received image characteristic parameter with the loaded characteristic information of the display unit to determine whether the received image characteristic parameter is the same as the loaded characteristic information; and
if it is determined that the received image characteristic parameter is the same as the loaded characteristic information, outputting an operation mode conversion signal to the display unit to convert the image display mode into an operation mode corresponding to the received image characteristic parameter.

23. The method of claim 22, further comprising:
if it is determined that the received image characteristic parameter is not the same as the loaded characteristic information, outputting a notification signal indicating the determination result.

24. An image display mode conversion method comprising:
receiving an image characteristic parameter which is information regarding whether image data represents a two-dimensional (2D) image or a three-dimensional (3D) image;
comparing the received image characteristic parameter with a previous image characteristic parameter representing a characteristic of image data which is currently being displayed to determine whether or not the received image characteristic parameter is different from the previous image characteristic parameter; and
if it is determined that the received image characteristic parameter is different from the previous image characteristic parameter, outputting a notification signal indicating the determination result.

25. The method of claim 24, wherein the received image characteristic parameter further includes information regarding a number of camera viewpoints for the 3D image if the image data is a 3D image.

26. The method of claim 24 or 25, wherein the received image characteristic parameter further includes information regarding a display format of the 3D image if the image data is a 3D image.

27. A computer-readable medium having embodied thereon a computer program for executing the image display mode conversion method of claim 15 or for executing the image display mode conversion method of claim 24, or for executing the image display mode conversion method of any one of the claims dependent on claim 15 or claim 24.
